(19) Europäisches Patentamt / European Patent Office / Office européen des brevets

(11) **EP 2 433 416 B1**

(12) **EUROPEAN PATENT SPECIFICATION**

(45) Date of publication and mention
of the grant of the patent:
**26.04.2017 Bulletin 2017/17**

(21) Application number: **10777430.9**

(22) Date of filing: **21.05.2010**

(51) Int Cl.:
*H04M 1/725* (2006.01)      *G06F 17/30* (2006.01)

(86) International application number:
**PCT/FI2010/050409**

(87) International publication number:
**WO 2010/133770 (25.11.2010 Gazette 2010/47)**

(54) **CONTEXT RECOGNITION IN MOBILE DEVICES**

KONTEXTERKENNUNG IN MOBILGERÄTEN

RECONNAISSANCE DE CONTEXTE DANS DES DISPOSITIFS MOBILES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.05.2009 FI 20095570**

(43) Date of publication of application:
**28.03.2012 Bulletin 2012/13**

(73) Proprietor: **Teknologian tutkimuskeskus VTT Oy 02150 Espoo (FI)**

(72) Inventors:
• **KÖNÖNEN, Ville**
  **FI-90100 Oulu (FI)**
• **LIIKKA, Jussi**
  **FI-90540 Oulu (FI)**
• **MÄNTYJÄRVI, Jani**
  **FI-90460 Oulunsalo (FI)**

(74) Representative: **Heinonen & Co Attorneys-at-Law Ltd Fabianinkatu 29 B 00100 Helsinki (FI)**

(56) References cited:
WO-A1-03/043356      US-A1- 2004 192 269
US-A1- 2007 099 602      US-A1- 2009 099 820

• FROELICH J. ET AL: 'MyExperience: A System for In situ Tracing and Capturing of User Feedback on Mobile Phones' PROCEEDINGS OF THE 5TH INTERNATIONAL CONFERENCE ON MOBILE SYSTEMS, APPLICATIONS AND SERVICES, ACM NEW YORK 2007, NY, USA, pages 57 - 70, XP008164665
• BRUNS E. ET AL: 'Mobile Phone-Enabled Museum Guidance with Adaptive Classification' IEEE COMPUTER GRAPHICS AND APPLICATIONS, IEEE SERVICE CENTER, NEW YORK 01 July 2008, NEW YORK, NY, USA, pages 98 - 102, XP011229508
• GUI F. ET AL: 'A Client-Server Architecture for Context-Aware Search Application' INTERNATIONAL CONFERENCE ON NETWORK-BASED INFORMATION SYSTEMS, 19.08.2009, IEEE 19 August 2009, PISCATAWAY, NJ, USA, pages 539 - 546, XP031578035
• KONONEN V. ET AL: 'Automatic feature selection for context recognition in mobile devices' PERVASIVE AND MOBILE COMPUTING 09 July 2009, ELSEVIER, NL, pages 181 - 197, XP026989910

**Description**

FIELD OF THE INVENTION

Generally the invention pertains to mobile devices. In particular, the invention concerns context-awareness and context recognition in such devices.

BACKGROUND

Traditionally different electronic devices such as computers have been completely context-independent, i.e. each device has been programmed to act in a similar manner irrespective of the context associated with the device and/or the user thereof. More recently the concept of context-awareness has gained in popularity among device and application developers. Nowadays many electronic apparatuses contain built-in sensors that may be configured to provide real-time data on the surrounding environment. Based on the collected data, it is possible to deduce the current context, i.e. state of the physical environment, state of the device, and/or the physiological state of the user, for example. Accordingly, the context information may be utilized in implementing context-aware applications, services, and functionalities such as context-sensitive UIs (user interface) in the devices.

Context-awareness may generally be active or passive, i.e. the device may automatically adapt its current functionalities, such as an application, on the basis of the detected context, or it may merely represent the observed details of the current context to the user for use as a springboard for subsequent user-controlled adjustment actions, respectively. Yet, context-awareness may be divided into direct and indirect awareness, wherein direct awareness is supported by the devices that may establish the current context substantially independent of other parties, e.g. via built-in sensors, whereas indirect context-aware devices rely more on the context information as determined and provided by external entities, such as a network infrastructure.

The core of a context recognition system is typically a classification algorithm that maps current observations as provided by a number of sensors to a context. Classification itself is rather mature research area, whereupon some literature already exists on the classification methodology especially in the research field of pattern recognition. Also research for mobile context and activity recognition has been carried out in the past. Several classification studies indicate that total recognition accuracies for out-of-the-lab real-life data vary between about 60-90%. In most studies the utilized classifiers are among the standard ones, for which computational requirements for training and recognition are quite high. Indeed, the mobility of the devices usually poses several challenges for the applicability of pattern recognition algorithms. For example, computational, memory as well as power supply resources are often quite limited in mobile devices such as mobile terminals or PDAs (personal digital assistant). Alternatively, context-awareness is in some mobile solutions achieved, instead of utilizing an actual context recognition algorithm, by considerably simpler analysis of available sensor values e.g. via a threshold-based comparison logic, but the achievable versatility, resolution and accuracy of context recognition/detection are correspondingly lower as well.

Patent application publication US 2009/0099820 A1 discloses an event-detection in multi-channel sensor-signal streams, which relates to the preamble of claim 1.

For instance, publication US2002167488 discloses a mobile device that includes at least one sensor, such as a tilt sensor implemented by an accelerometer, which provides contextual information, e.g. whether the mobile device is being held or not. When the mobile device receives an incoming message, or notification, the device responds thereto based at least in part upon the contextual information.

SUMMARY OF THE INVENTION

The objective is to alleviate at least some of the defects evident in prior art solutions and to provide a feasible alternative for mobile context recognition.

The objective is achieved by a mobile device and a method in accordance with the present invention. The devised solution incorporates utilization of a context recognition algorithm tailored for mobile use. The contexts to be detected and recognized may include various contexts of user activity and/or physiological status, such as different sports activities, for instance. Additionally or alternatively, also other contexts like environment and/or device status may be recognized by the suggested solution.

Accordingly, in one aspect of the invention, wherein a number of sensing entities are used for obtaining data indicative of the context of a mobile device and/or user thereof, the mobile device comprises:

a feature determination logic for determining a plurality of representative feature values on the basis of the data, the features preferably being substantially linearly separable, and

a context recognition logic including an adaptive linear classifier, configured to map, during a classification action, the plurality of feature values to a context class, wherein the classifier is further configured to adapt the classification logic thereof on the basis of the feature values and feedback information by the user of the mobile device.

The above elements of the mobile device are substantially functional and their implementation may also be mutually integrated, if desired, depending on each particular embodiment. For example, in one embodiment the context recognition logic includes the feature determination logic. The aforesaid logics may be at least partially implemented by computer software executed by a processing entity.

The classifier may be initially trained by e.g. supervised learning on the basis of available data/feature value vs. indicated context information. For example, such information may be collected from a plurality of different users and it may thus provide a generally applicable, non-personalized initial state of the classifier, which may work reasonably well on average. Thereafter, on-line/run-time adaptation, such as personalization, may take place upon receiving direct or indirect feedback by the user(s) of the mobile device. In case there is only one user whose feedback is used to adapt the classifier, the adaptation is also personalization. A mobile device may comprise a classifier with multiple classification logic settings, e.g. one for each user (profile) of the device.

In one embodiment, the feedback information applied includes direct feedback (~guidance) data, i.e. user input, explicitly indicating the correct context for the data and for the feature values derived therefrom in view of a certain classification action. The user may therefore, through the direct feedback, flexibly (e.g. intermittently whenever he is willing to assist and cultivate the classifier) and cleverly supervise the classifier during execution after its actual start-up and between automated classification actions. As the user directly indicates the correct context, it is not necessary to execute an automated classification round for the corresponding features. Instead, the classifier may utilize the data and/or the corresponding feature values for adapting the classifier.

In one, either supplementary or alternative, embodiment the feedback includes more indirect feedback obtained after the classification action by the classifier, such as positive/negative feedback, +/- feedback, or some other dedicated indication of the quality and correctness of the automatically performed classification and/or of subsequent action based on the classification and taken by the mobile device. The UI, such as two keys or areas on the touchscreen, of the mobile device may be configured so as to capture this kind of context-related feedback from the user. For example, a key having an asterisk or some other symbol, number, or letter printed thereon may be associated with positive feedback (correct automatic classification), and some other key, e.g. hash mark, key with negative feedback (incorrect automatic classification). The classifier may be adapted such that the nature of the feedback is taken into account.

Alternatively or additionally, the indirect feedback may include even more indirect user feedback, which may be inferred from the user reactions, e.g. activity and/or passivity, relative to the mobile device. For example, when context recognition is used by the mobile device to trigger conducting an automated action, such as launching an application or switching a mode or e.g. display view, and the user, e.g. within a predetermined time period from the action, discards the action, such as closes/alters the launched application, mode or view, such user response may be considered as negative indirect feedback from the standpoint of the context classification event, and the classifier is adapted correspondingly. On the other hand, if the user is passive relative to the automated action or, for example, starts using an automatically context-triggered application, such a response may be considered as positive feedback for the classifier adaptation.

In a further, either supplementary or alternative, embodiment during adaptation and in the case of direct, explicit feedback, the ideal vector, being often called as "prototype" or "centroid", of a class of the obtained feature (value) vector, may be updated using an exponential moving average (EMA) or some other update algorithm, for instance. In the case of indirect positive or negative feedback, the ideal vector may be brought closer to or farther away from the new feature (value) vector, respectively, by amount determined on the basis of a weighted difference between the new feature vector and old ideal vector. E.g. learning vector quantization (LVQ) may be applied for the purpose as to be described in more detail hereinlater.

In one, either supplementary or alternative, embodiment the features for context recognition are selected using a sequential forward selection (SFS) or sequential floating forward selection algorithm (SFFS).

In view of the foregoing, in one alternative or supplementary further embodiment, the mobile device may be configured to utilize the detected context, i.e. the device supports active context-awareness and it may adjust its one or more functionalities on the basis of the context. For instance, the mobile device may be configured to execute, in response to the context, at least one action selected from the group consisting of: adaptation of the UI of the device, adaptation of an application, adaptation of a menu, adaptation of a service, adaptation of a profile, adaptation of a mode, trigger an application, close an application, bring forth an application, bring forth a view, minimize a view, lock the keypad or at least one or more keys or other input means, establish a connection, terminate a connection, transmit data, send a message, trigger audio output such as playing a sound, activate tactile feedback such as vibration unit, activate the display, input data to an application, and shut down the device. As one more concrete exemplary use case, upon recognizing certain activity context, such as golf or other sports activity, the mobile device could trigger a context-related application, e.g. a points calculator, and/or terminate some unrelated functionality. Additionally or alternatively, the device may support passive context awareness, i.e. it recognizes the context, but does not automatically adjust to it. The user may then observe the context and execute associated actions.

In one embodiment at least one sensing entity includes a sensor capturing a physical quantity, such as temperature, acceleration, or light (intensity), and converts it into an electrical, preferably digital, signal. In another, either supplementary or alternative, embodiment at least one sensing entity includes a sensing logic, e.g. "software probe" or "software sensor", configured to provide data on the internal status of the mobile device, such as memory contents and/or application/data transfer state. Also combined sensing entities with dedicated software and hardware elements may be used.

The mobile device may support direct context awareness, i.e. it may be self-contained what comes to the sensing entities. Alternatively or additionally, the mobile device may support indirect context awareness, i.e. it receives sensing data from external, functionally connected entities such as external sensor devices wiredly or wirelessly coupled to the mobile device. The mobile device basic unit and the connected sensing entities may thus form a functional mobile device aggregate in the context of the present invention.

In one, either supplementary or alternative, embodiment the classifier comprises a minimum-distance classifier.

In one, either supplementary or alternative, embodiment, the sensed data indicative of the context relates to at least one data element selected from the group consisting of: temperature, pressure, acceleration, light measurement, time, heart rate, location, active user profile, calendar entry data, battery state, and microphone (sound) data. For example, if a calendar entry at the time of determining the context indicates some activity, such as "soccer", it may be exploited in the recognition process, for example, for raising the probability of the context whereto the calendar indication falls, or as one feature value.

In one embodiment the feature values of different features form a sample vector, wherein each feature value may be binary/Boolean and/or of other type, e.g. numerical value with a predetermined larger range.

In another aspect of the present invention, a method for recognizing a context by a mobile device, comprises obtaining data indicative of the context of the mobile device and/or user thereof,
determining a plurality of feature values on the basis of and representing at least part of the data,
classifying, by an adaptive linear classifier, the plurality of feature values to a context class, and
adapting the classification logic of the classifier on the basis of the feature values and feedback information by the user.

The previously presented considerations concerning the various embodiments of the mobile device may be applied to the method mutatis mutandis.

The utility of the present invention follows from a plurality of issues depending on each particular embodiment. The preferably adaptive classifier is computationally light and consumes less memory than most other algorithms, which spares the battery of the mobile device and leaves processing power for executing other simultaneous tasks. Adaptivity leads to considerably higher classification accuracies than obtained with static off-line algorithms. The solution inherently supports continuous learning as supervising the classifier is possible without entering a special training phase etc. Training does not substantially require additional memory space. The preferred selection of substantially linearly separable features further increases the performance of the linear classifier.

The expression "a number of" refers herein to any positive integer starting from one (1), e.g. to one, two, or three.

The expression "a plurality of" refers herein to any positive integer starting from two (2), e.g. to two, three, or four.

Different embodiments of the present invention are disclosed in the dependent claims.

BRIEF DESCRIPTION OF THE RELATED DRAWINGS

Next the invention is described in more detail with reference to the appended drawings in which

Fig. 1 illustrates the concept of an embodiment of the present invention.
Fig. 2 illustrates internals of an embodiment of a mobile device in accordance with the present invention.
Fig. 3a depicts the effect of the number of features in the context recognition accuracy in connection with an embodiment of the present invention.
Fig. 3b depicts the effect of adaptation in the context recognition accuracy in connection with an embodiment of the present invention.
Fig. 3c depicts battery lifetime in view of a mobile phone platform and different classification algorithms.
Fig. 3d correspondingly depicts average CPU load with different classifiers.
Fig. 4 is a flow chart disclosing an embodiment of a method in accordance with the present invention.

DETAILED DESCRIPTION OF THE EMBODIMENTS

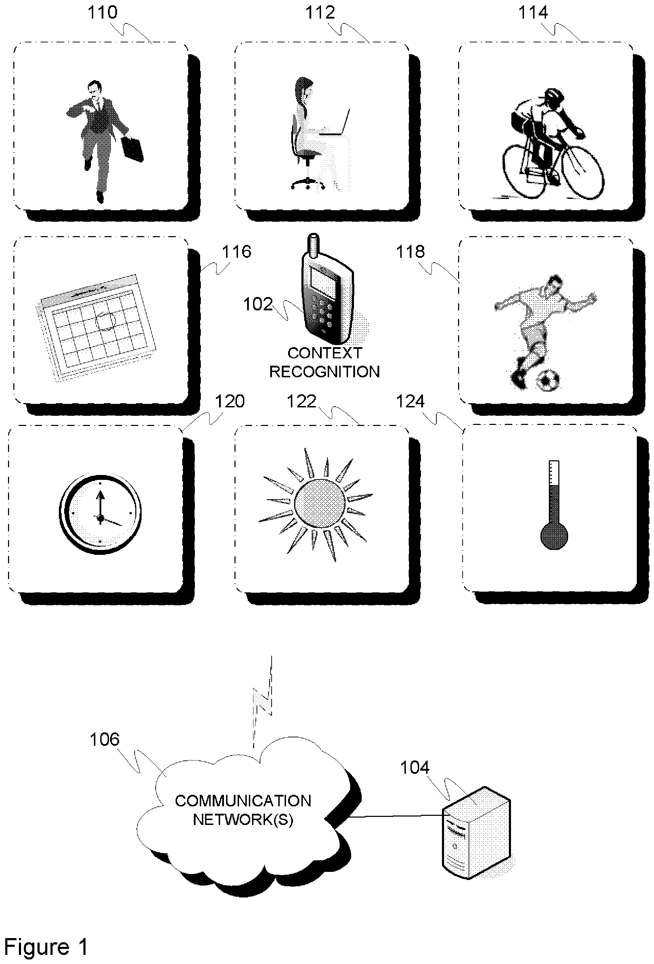

Figure 1 illustrates the overall concept of the present invention according to one embodiment thereof. A mobile device 102, such as a mobile phone, a PDA (personal digital assistant), a smartphone, a wristop, a wrist watch or a wrist computer, a calculator, a music player, or a multimedia viewer may be configured so as to be able to sense the context of the device 102 and/or user thereof and to optionally control its functionalities accordingly. For instance, the device 102 may be configured to recognize and make a distinction between running activity 110, sitting or lying activity (or thus "passivity") 112, cycling activity 114, soccer activity 118 and/or other physical and/or sports activities, as well as e.g. light intensity 122, temperature 124, time/temporal context 120, and/or calendar event 116.

The mobile device 102 may include integrated and/or at least functionally, i.e. wirelessly or in a wired manner, connected sensing entities such as various sensors providing the necessary measurement, or "raw", data for characterizing feature determination and context classification. The sensing entities may contain specific hardware, such as sensors sensing some physical quantity, and/or specific software to acquire the predetermined sensing data. Some sensing entities may be substantially software-based such as entities acquiring data related to the data stored in the device such as calendar data or device (sw) status data.

The sensing entities may include one or more sensors such as accelerometers, temperature sensors, location sensors such as a GPS (Global Positioning System) receiver, pulse/heart rate sensors, and/or photometers.

Preferably the mobile device 102 includes all the necessary logic for performing the classification, or at least it may co-operatively conduct it with one or more functionally connected external sensing entities. Alternatively, at least part of the classification may be executed in an external entity, such as a server 104 accessible via one or more (wireless and/or wireless) network(s) 106, in which case the mobile device 102 is not self-contained as to the classification procedure, but the computational, memory, and battery resources may be spared instead.

In some use scenarios substantially user-related data such as physiological data acquired through sensing the status of the user via a heart rate monitor, for example, may be collected for feature (value) determination. In other scenarios device-related data such as device status information and/or memory contents information may be collected. In further scenarios environmental data such as temperature or lightness information may be collected. Different types of source data may be also utilized in the same context recognition procedure. Generally, data to be collected for context classification purposes may be thus flexibly determined for each use case by a skilled person depending on the available sensing functionalities and the nature of the contexts in accordance with the teachings provided herein.

Raw data may be sampled at a predetermined sampling rate using a predetermined sampling window, for example. The raw data may be transformed into corresponding higher level feature value(s) used in the context recognition, which may refer to time-domain, frequency-domain, and/or some other domain features. Feature values may be interpolated to match with a desired resolution, e.g. time resolution. Some data available at the mobile device 102 may be directly applicable in the context recognition procedure as one or more feature(s), i.e. a separate higher level feature determination (by averaging temporal raw data values, for instance) therefrom is not necessary.

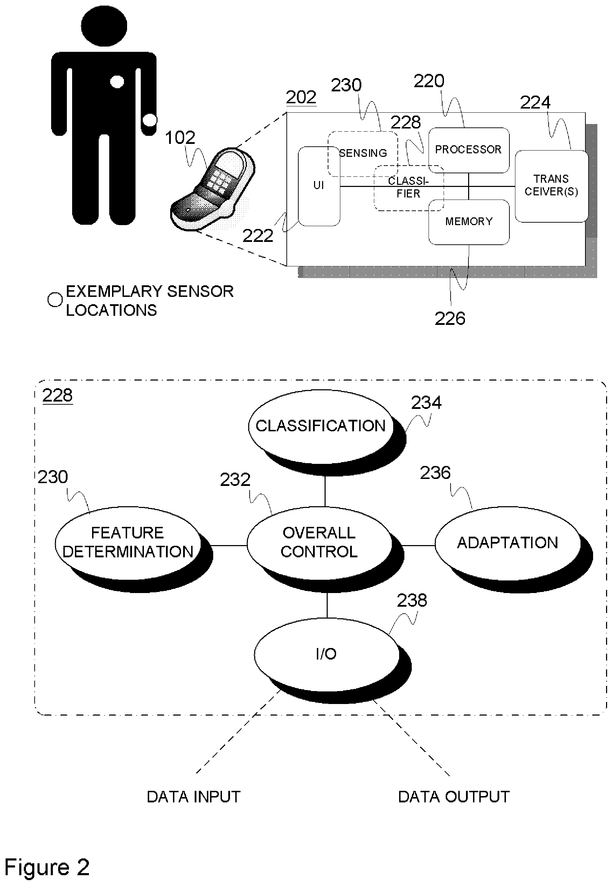

Figure 2 illustrates the internals 202 of an embodiment of the mobile device 102 in accordance with the present invention at least from a functional standpoint. The mobile device 102 is typically provided with one or more processing devices capable of processing instructions and other data, such as one or more microprocessors, micro-controllers, DSP's (digital signal processor), programmable logic chips, etc. The processing entity 220 may thus, as a functional entity, physically comprise a plurality of mutually co-operating processors and/or a number of sub-processors connected to a central processing unit, for instance. The processing entity 220 may be configured to execute the code stored in a memory 226, which may refer to instructions and data relative to the context recognition logic such as context classification software 228 for providing user of the device 102 and/or the other internal entities in the device 102 with current context classifications. Software 228 may utilize a dedicated or a shared processor for executing the tasks thereof. Similarly, the memory entity 226 may be divided between one or more physical memory chips or other memory elements. The memory 226 may further refer to and include other storage media such as a preferably detachable memory card, a floppy disc, a CD-ROM, or a fixed storage medium such as a hard drive. The memory 226 may be non-volatile, e.g. ROM (Read Only Memory), and/or volatile, e.g. RAM (Random Access Memory), by nature. The sensing entities 230 may include sensors and/or dedicated software elements for obtaining the source data for context determination. The source data may be converted from "raw" form into higher level features (values) used in the context recognition logic, in particular the classifier, and/or it may be directly feasible as deliberated hereinbefore.

The UI (user interface) 222 may comprise a display, and/or a connector to an external display or data projector, and keyboard/keypad or other applicable control input means (e.g. touch screen or voice control input, or separate keys/buttons/knobs/switches) configured to provide the user of the device 102 with practicable data visualization and device control means. The UI 222 may include one or more loudspeakers and associated circuitry such as D/A (digital-to-analogue) converter(s) for sound output, and a microphone with A/D converter for sound input. In addition, the device 102 may comprise a transceiver incorporating e.g. a radio part 224 including a wireless transceiver, such as WLAN or GSM/UMTS transceiver, for general communications with other devices and/or a network infrastructure, and/or other wireless or wired data connectivity means such as one or more wired interfaces (e.g. Firewire or USB (Universal Serial Bus)) for communication with other devices such as terminal devices, peripheral devices, such as external sensors, or network infrastructure(s). It is clear to a skilled person that the device 102 may comprise numerous additional functional and/or structural elements for providing beneficial communication, processing or other features, whereupon this disclosure is not to be construed as limiting the presence of the additional elements in any manner.

Element 228 depicts only one functional example of the context recognition logic 228 typically implemented as software stored in the memory 226 and executed by the processing entity 220. The logic has an I/O module 238 for interaction with other parts of the host device 102 including data input (measurement raw data, feedback, etc.) and output (classifications, etc.). An overall control logic 232 may take care of the coordination of various tasks performed by the logic 228. Feature determination block 230 may determine, or "extract", the feature values from the supplied data for use with the classifier 234 that then maps the feature values (e.g. an n-dimensional feature vector comprising a plurality of feature values) to a context. Optionally the feature determination block 230, or some other preferred entity, may also be used for the actual feature selection through utilization of a desired feature selection algorithm, for example. The adaptation block 236 takes care of adapting the classification logic of the classifier 234 on the basis of the feature values obtained feedback.

Considering next especially a minimum-distance classifier as one potential starting point for classification, one rather straightforward way to accomplish classification of samples, wherein each sample comprises a number of feature values, is to calculate a distance from a sample to the ideal elements that represent classes in the best possible way and then select the class to which the distance is the smallest. If the samples are represented in an N-dimensional vector space then there will be N-1 dimensional hyperplane separating each class. In such case, it would be natural to use e.g. a mean value as the ideal element of each class.

More rigorously, the whole classification procedure can be expressed as follows: consider a classification task where we have to associate an N-dimensional sample s to one of the C classes. For each class j = 1, ..., C, we have $I^j$ training samples $x_i^j i = 1, ..., I^j$. Further, let $c^j$ represent the ideal vector (may be called as "centroid" or "prototype"), for the class j, i.e.:

$$c^j = \frac{1}{I^j}\sum_{i=1}^{I^j} x_i^j. \tag{1}$$

Now, the classification to the class $j^*$ can be performed as follows:

$$j^* = \arg\ min_{j=1}^{C} \left\| s - c^j \right\|, \tag{2}$$

wherein $\|\cdot\|$ is a selected norm, such as Euclidean norm, for determining the nearest ideal vector and thus class represented by it.

The above described linear classifier has certain advantages. It has small computational and space requirements. It is easy to implement on various mobile platforms and teaching the classifier is very efficient. Moreover, the classifier can be enhanced as described hereinafter.

Although in practical circumstances data is rarely linearly fully separable, selecting a suitable set of features, i.e. the features that maximize the linear separability of the classes, it is possible to achieve good classification accuracy also with linear classifiers.

An adaptive linear classifier is preferably constructed to improve the performance of the classifier. As being obvious on the basis of the foregoing, a classifier is a mapping from a feature space to a class space. One computationally demanding phase relates to fixing internal parameters of the classifier and this phase also requires a lot of data. Hence, usually it is not possible to fix parameters in on-line, or "real-time", fashion in mobile devices. However, a computationally light-weight classification algorithm may be established and configured so as to support on-line learning.

Accordingly, each time the classifier is applied for determining the context, a new feature value vector is obtained and exploited in adapting the classifier. How this can be accomplished depends on e.g. what kind of feedback we get from the user of the device. If direct context information is obtained from the user, e.g. via the UI of the device, e.g. selection of the context from an option list or typing in the context, relative to the obtained data (raw measurement data and derived feature values), updating the classifier is more straightforward.

Let $i_{new}$ be the class (context indicated by the user of the device) of a new feature (value) vector $x_{new}$. Then the corresponding mean may be updated, for example, as follows:

$$c_{new}^{i_{new}} = (1 - \alpha)c_{old}^{i_{new}} + \alpha x_{new}, \tag{3}$$

where $\alpha$ is preferably a sufficiently small learning rate parameter. This is a rough version of a recursive algorithm to calculate arithmetic mean, so-called exponential moving average (EMA). Note also that class information from the user is not needed all the time, i.e. during every context classification action (round); updating can be done when new feedback information is available.

The above updating scheme is applicable when a user provides direct feedback, i.e. directly indicates the context associated with the feature vector and data behind the feature vector. In many cases, however, this might be notorious task for the user.

Another, either supplementary or alternative, possibility is to collect only indirect feedback signal from the user, i.e. the user just gives a feedback to the classifier on how well it is performing. Then the update may be performed according to the implicit or indirect feedback and classification instructions. Let $i^*$ be an estimate for the context. If the user provides a feedback signal and it is positive, the ideal vector for the class may be modified, for example, as follows:

$$c_{new}^{i^*}=c_{old}^{i^*} + \beta(x_{new} - c_{old}^{i^*}), \tag{4}$$

where $x_{new}$ is a new feature (value) vector. In other words, the ideal vector is brought closer to the new feature (value) vector by amount determined on the basis of a weighted difference between the new feature vector and old ideal vector. Correspondingly, if the user gives a negative feedback, updating may be done, for example, as follows:

$$c_{new}^{i^*}=c_{old}^{i^*} - \gamma(x_{new} - c_{old}^{i^*}). \tag{5}$$

In other words, the ideal vector of the class is brought apart from the feature vector by amount determined on the basis of a weighted difference between the new feature vector and old ideal vector. In the above equations, $\beta$ and $\gamma$ are preferably sufficiently small learning rates, being either equal or unequal (and similarly either being equal or unequal to $\alpha$), for positive and negative feedbacks, respectively. These two equations are a special case of Learning Vector Quantization (LVQ) algorithm.

Reverting to the realm of feature selection methods, it is initially possible construct a vast number of different features from the raw data. However, it is both computationally and memory-wise clever to use as few of features as possible in the actual classification. Determining features and related feature values from raw signals typically requires a lot of computation and it is even possible to attain suboptimal results, if too many features are used. Preferably, substantially linearly separable (e.g. nearly or maximally) features are selected for the linear classifier.

Sequential Forward Selection (SFS) is one method used for feature selection in many application domains. The SFS may also be applied in the context of the present invention. The key idea in the SFS-algorithm is to add a feature that increases the classification accuracy most to the current pool of features at each time step. In the other words, the SFS-algorithm performs greedy optimization in the feature space. Another exemplary method is called as Sequential Backward Selection (SBS) that starts with the full set of features and gradually removes features from the pool. As a further example, in Sequential Floating Forward Selection (SFFS) the procedure includes two parts; a new feature for the subset is added by the SFS-method. The worst feature is then conditionally excluded until no improvement is made to the previous sets. This method avoids the nesting effect of SFS, in which the discarded features cannot be selected anymore. The inclusion and exclusion of a feature is deduced using a criterion value. It can be e.g. a distance measure or a classification result. To explain the algorithm more thoroughly, a new feature, which gives the best criterion with the previously selected features, is added to the feature subset (the SFS method). A conditional exclusion is applied to the new feature set, from which the least significant feature is determined. If the least significant feature is the last one added, the algorithm goes back to selecting a new feature by SFS. Otherwise the least significant feature is excluded and moved back to the set of available features and conditional exclusion is continued. Again, the least significant feature is determined and the criterion without this feature is compared to the criterion with the same number of features in the memory. If the criterion is improved, the feature is excluded and moved back to the set of available features and this step is repeated until no further improvement is made. The cycle starts all over again by adding a new feature until the previously defined subset size is reached.

A practical example of the applicability of the present invention is described below with reference to a test set-up.

A dataset comprising realistic context information collected using various sensors, such as accelerometers and physiological sensors, was utilized. The data were collected in various sport activities such as running and walking. In addition to these simple activities, also a number of combined activities were recorded, such as shopping, eating in the restaurant, simplified soccer playing (passing a ball between two persons) etc. In the study the focus was on the simple activities and soccer playing. Hip and wrist acceleration signals and the heart rate signal were used as input data. Feature values were calculated by windowing the corresponding raw signal with different window lengths (e.g. 10 seconds) including both time-domain (e.g. maximum and minimum values) and frequency domain features (e.g. power spectrum entropy). Feature values were interpolated so that time resolution was one second.

As there were two 3D accelerometers for data acquisition, it resulted in the initial feature pool shown in Table 1 below.

**TABLE 1: INITIAL POOL OF FEATURES**

| FEATURE | EXPLANATION / VALUE |
| --- | --- |
| Max acceleration | Max. value of the acceleration signal |
| Min acceleration | |
| Mean acceleration | |
| MinMax acceleration | Difference between max and min |
| Variance | Variance of the acceleration signal |
| Power spectrum entropy | Entropy of the normalized power spectrum estimate |
| Peak frequency | Frequency of the highest peak of the spectrum |
| Peak power | Height of the highest peak |
| Heart rate | Mean heart rate value |

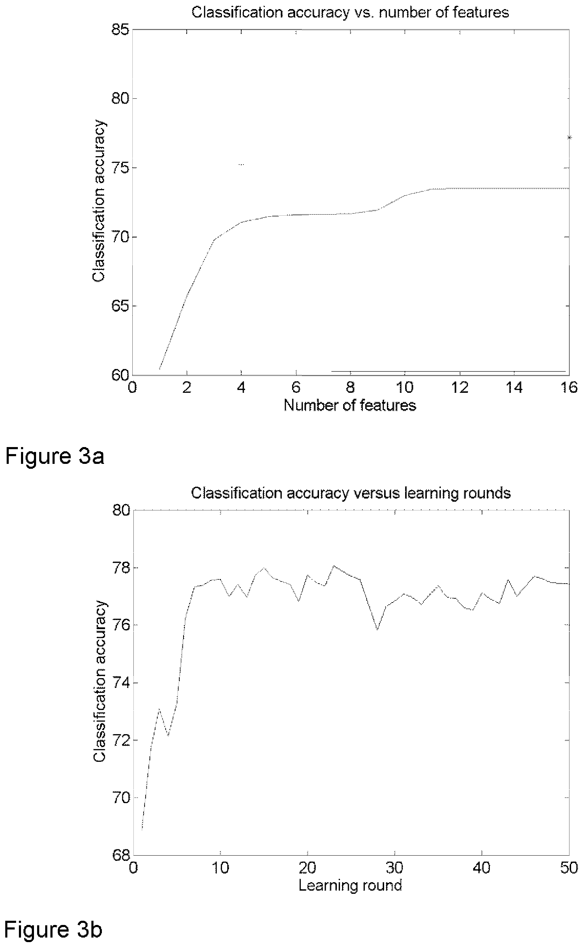

In Fig. 3a, the classification accuracies are plotted against a number of features used for context recognition. The features were selected by the SFS method. From this figure it can be seen that relatively high accuracy is achieved already with about five features in the visualized case of the minimum-distance classifier. However, getting the maximal accuracy needs as many as about 10 or 11 features. Note that the curve in Fig. 3a is dependent on the feature selection method used, SFS in this case, and therefore it is not possible to simply generalize the results to other feature selection techniques. In our tests we finally used 10 features.

The feature sets with 10 features found by the SFS and SFFS methods for minimum-distance classifier are enlisted in the Table 2.

**TABLE 2: SELECTED FEATURE SETS**

| SFS | SFFS |
| --- | --- |
| Hip acceleration, X-dimension, MinMax | Hip acceleration, X-dimension, Variance |
| Hip acceleration, Y-dimension, Maximum | Hip acceleration, Y-dimension, Maximum |
| Hip acceleration, Y-dimension, Minimum | Hip acceleration, Y-dimension, Minimum |
| Hip acceleration, Y-dimension, MinMax | Hip acceleration, Y-dimension, MinMax |
| Hip acceleration, Y-dimension, Mean | Hip acceleration, Y-dimension, Mean |
| Hip acceleration, Y-dimension, Variance | Hip acceleration, Y-dimension, Variance |
| Hip acceleration, Z-dimension, Mean | Hip acceleration, Y-dimension, Peak frequency |
| Hip acceleration, Z-dimension, Variance | Hip acceleration, Z-dimension, Variance |
| Wrist acceleration, Y-dimension, Variance | Wrist acceleration, X-dimension, Peak frequency |
| Wrist acceleration, X-dimension, Mean | Wrist acceleration, Y-dimension, Peak frequency |

In the case of the minimum-distance classifier, it was found that one of the dimensions (Y-dimension) is dominating; all time- domain features calculated from this component are present in both feature sets. In the rest state, i.e. when a test subject stands still, this Y-dimension aligns with the direction of gravity. In addition both automatic feature selection methods ended up to the feature set that is got almost completely from one acceleration sensor only. This gave evidence of a possibility to implement the classifier in a mobile device with only one, potentially built-in acceleration sensor (accelerometer), and obtain reasonably high context recognition accuracies with such a hardware-wise simple context recognition system. The system enables particularly reliable recognition between clearly deviating activities such as sitting and running.

In most our tests we used the following nine activities: outdoor bicycling, soccer playing, lying, nordic walking, rowing with the rowing machine, running, sitting, standing, and walking.

The SFS feature selection method with the minimum-distance classifier achieved 73% total classification accuracy and SFFS led to similar results, 72%. Both feature selection methods led to substantially similar results, whereby the activities may be categorized to easily detectable ones and more difficult ones. The difference in total classification accuracy between SFS and SFFS methods was very small, but there indeed was variation in the recognition accuracy of individual activities. Combined activity soccer was detected better with SFFS features than with SFS features in the case of a minimum-distance classifier. Rowing was confused with sitting in some test cases. The reason is that a test subject is actually sitting on the bench of the rowing machine and if the movement is performed with very low intensity it may be easily misclassified as a normal sitting. Also bicycling may be confused with walking. Both of these movements are clearly periodic movements with quite a short period length. The major difference between them is the intensity of the movement. In walking, the total energy of the acceleration signal is usually much larger than in the bicycling. However, some people tend to walk with quite smooth style producing signal with a small energy leading to classification errors.

In general, teaching (~supervised learning) phase of a classifier requires a lot of computational and usually also memory resources. It is thus challenging to implement personalized context recognition systems capable of adapting to each user's behaviour automatically. Hereinafter, test results based on the afore-explained updating scheme are presented. As a result of the adaptation process, the classifier is personalized in view of the person giving the feedbacks. Initially the classifier may be thus adjusted, for example, on the basis of a larger user group (e.g. test group of users utilized by the device/classifier manufacturer) and then adapted to each user during the use thereof.

During test runs, context recognition processes were emulated by using the available dataset and randomized test settings. At each round, a random activity was chosen. Then, a random, fixed length (from about 5 to about 100 seconds), time window was isolated from the chosen activity. Mean value calculated from the window was used in the linear classifier. As the short time windows from the same activity can differ considerably, the procedure was repeated multiple times, e.g. about 100 000 times to ensure proper coverage of the different properties of the activity. As discussed herein earlier, it is not required to get feedback from the user of a device after each context recognition activity. User behavior was simulated by giving feedback signal with a probability. In addition, it was assumed that the user knows the right context of the device.

The effect of adaptation in the obtained context recognition accuracy is shown in Fig. 3b. The learning rate parameter and the feedback probability were set to 0.1. The used window length was 5 seconds. On average, with the learning rate of 0.1, about 10-20 feedbacks were needed to adapt the classifier for a user. Adaptation based on personal feedback information by the user of the device thus increases the overall classification accuracy typically by several percentage units, e.g. by about 5-10 percentage units, on average in contrast to unadapted non-personalized classifiers (e.g. classifier trained with more generic training data from a plurality of users)

Longer windows may lead to better context recognition accuracies (and increased computation). This is natural because uncertainty caused by single data values decreases with the lengthened sample window. Increasing learning rate parameter increases also the classification accuracy as long the learning rate is not too high. In the case of too high learning rate parameter, the classifier is too sensitive for individual samples and the total classification accuracy decreases. The learning rate parameters less than about 0.1 are suitable for personalization task.

One goal of classification is, in connection with the present invention, to achieve high context recognition accuracy with the available data representing and characterizing the contexts where the mobile device is used. Particularly with mobile devices, the limiting constraint for recognition is the lack of resources, i.e. computational, memory (and even sensor) space, and power resources. The suggested adaptive linear classifier has low resource requirements. Not only the classification method itself affects the context recognition accuracy but also the features used as inputs for the classifier. We should find a suitable set of features for each classifier. In the case of the above minimum-distance classifier, the feature set consisted mostly of time domain features that may be efficiently computed from raw data. The set also has a preferred property that the features may be determined almost entirely on the basis of the signals by the hip acceleration sensor(s). This for its part indicates that it is possible, at least with certain use scenarios, to apply only one, possible built-in, acceleration sensor for context recognition. By implementing the adaptation method to personalize context recognition system, it is possible to increase context recognition accuracy significantly. Advantageously approximately 10 feedback signals will be obtained from the user to personalize the system. With personalization, accuracy attained by using the simple minimum-distance classifier is comparable with those attained by using more complex algorithms.

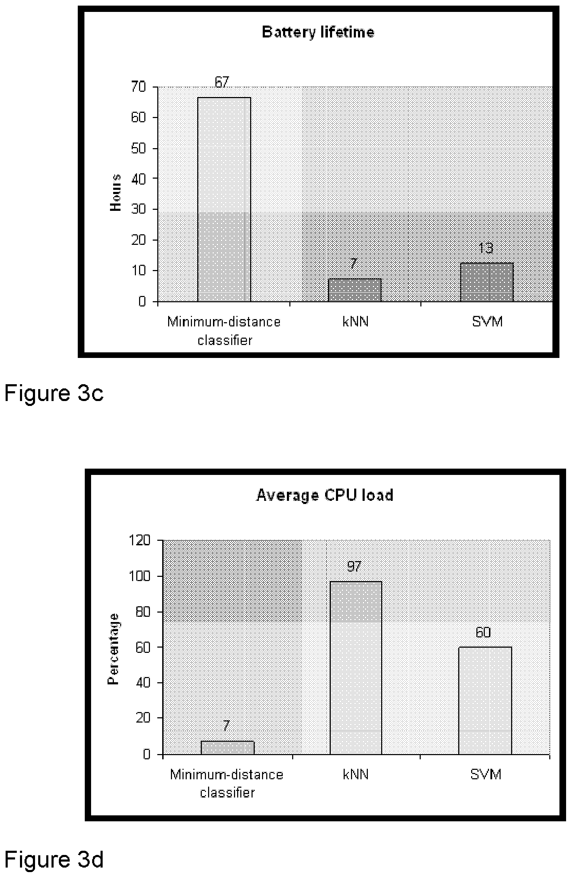

Figure 3c discloses a chart of a (1.2 Ah) battery lifetime of a mobile phone (tested platform: Nokia N95) in view of different classifiers. As may be seen from the chart, the suggested linear (minimum-distance) classifier is by far the most battery-saving classification algorithm of the tested ones due to the computational lightness thereof, for example. Accordingly, figure 3d discloses a chart of average CPU load (tested platform: Nokia N95) induced by the different classifiers.

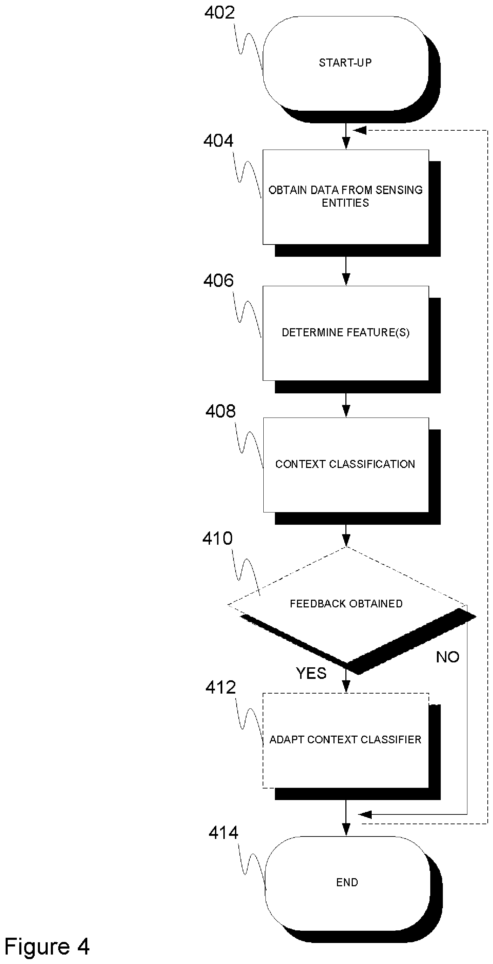

Figure 4 discloses, by way of example only, a method flow diagram in accordance with an embodiment of the present invention. At 402 a mobile device in accordance with the present invention is obtained and configured, for example, via installation and execution of related software and sensing entities, for context recognition. Features to be used in the classifier may be determined. At 404 data indicative of the context of the mobile device and/or user thereof is obtained. At 406 one or more feature values representing at least part of the data are determined. At 408, the context recognition logic preferably including an adaptive linear classifier maps, during a classification action, the feature values to a context class. Provided that feedback is obtained 410, the classifier is, at 412, further configured to adapt the classification logic thereof on the basis of the feature values and feedback information by the user of the mobile device. In case (not shown) the obtained feedback is direct, explicit feedback (i.e. the user provides a correct context class upon the data capture), the context as directly indicated by the user is preferably selected and the classifier may omit executing its actual classification algorithm. However, the classification logic is still preferably updated according to the directly indicated context as described hereinbefore. Method execution is ended at 4. The broken arrow depicts the potentially continuous nature of method execution. The mutual ordering of the method steps may be altered by a skilled person based on the requirements set by each particular use scenario.

Consequently, a skilled person may on the basis of this disclosure and general knowledge apply the provided teachings in order to implement the scope of the present invention as defined by the appended claims in each particular use case with necessary modifications and additions. For instance, the reliability of a context recognition event may be evaluated. E.g. distance to the nearest centroid may be determined in the case of the minimum-distance classifier. If the reliability is not very high (the distance exceeds a predetermined threshold, for example), the context recognition procedure would benefit from classification information from other devices. The minimum-distance classifier could then utilize a collaborative context recognition domain, wherein e.g. averaged data on the classification of the corresponding event is available and may be followed by the independent classifiers in uncertain cases. Further, instead of an adaptive linear classifier, some other type of adaptive classifier could be exploited according to the basic principles set forth hereinbefore. Alternatively, even a non-adaptive linear classifier could be exploited in the context of the present invention preferably still provided that the feature determination logic applies features selected (at least some, preferably all of them) such that they are substantially, e.g. maximally or nearly, linearly separable for increasing the performance of the linear classifier.

## Claims

1. A mobile device (102) comprising:

   a feature determination logic (230) for determining a plurality of representative feature values on the basis of sensing data indicative of the context of the mobile device and/or user thereof, and
   a context recognition logic (228) including an adaptive linear classifier (234), configured to map, during a classification action, the plurality of feature values to a context class, wherein the classifier is further configured to adapt (236) the classification logic thereof on the basis of the feature values and feedback information by the user of the mobile device,
   **characterized by** in the case of positive or negative feedback regarding the performed classification, the classifier being configured to adapt the classification logic thereof such that a prototype feature value vector of the recognized class is brought closer to or farther away from the feature vector determined by the plurality of feature values, respectively.

2. The mobile device of claim 1, **comprising** a number of sensing entities (230) for obtaining the sensing data indicative of the context of the mobile device and/or user thereof.

3. The mobile device of any preceding claim, **wherein** a plurality of features applied in the context classification are mutually substantially linearly separable.

4. The mobile device of claim 3, **wherein** the amount of adaptation is at least partially determined on the basis of a weighted difference between the new feature vector and old ideal vector.

5. The mobile device of claim 3 or 4, **wherein** the adaptation is based on exponential moving average (EMA).

6. The mobile device of any preceding claim, **wherein** the mobile device is configured to infer context classification feedback from the one or more actions, or lack of actions, of the user in relation to the mobile device.

7. The mobile device of any preceding claim, **wherein** the mobile device is configured to personalize the context recognition logic for the user of the mobile device through the adaptation based on feedback by the user.

8. The mobile device of any preceding claim, **wherein** the mobile device is configured to obtain direct feedback from the user including an indication of a correct class for the data, whereupon a prototype feature value vector of the class is adapted based on the data and/or features derived therefrom.

9. The mobile device of claim 8, **wherein** the adaptation is based on learning vector quantization (LVQ).

10. The mobile device of any preceding claim, **wherein** the classifier includes a minimum distance classifier.

11. The mobile device of any preceding claim, **wherein** the sensing entities are configured to obtain data relative to at least one element selected from the group consisting of: acceleration, hip acceleration, wrist acceleration, pressure, light, time, heart rate, temperature, location, active user profile, calendar entry data, battery state, and sound data.

12. The mobile device of any preceding claim, **wherein** the mobile device is configured to determine, from the data, at least one feature selected from the group consisting of: maximum acceleration, minimum acceleration, mean acceleration, difference between maximum and minimum acceleration, variance of the acceleration, power spectrum entropy, peak frequency, peak power, and mean heart rate.

13. The mobile device of any preceding claim, **wherein** the mobile device is configured to perform at least one action depending on the recognized context class.

14. The mobile device of claim 13, **wherein** said action is selected from the group consisting of: adaptation of the user interface of the device, adaptation of an application, adaptation of a menu, adaptation of a profile, adaptation of a mode, trigger an application, close an application, bring forth an application, bring forth a view, minimize a view, activate or terminate a keypad lock, establish a connection, terminate a connection, transmit data, send a message, trigger audio output such as playing a sound, activate tactile feedback such as vibration, activate the display, input data to an application, and shut down the device.

15. The mobile device of claim 13 or 14, **wherein** said at least one action comprises at least one element selected from the group consisting of: adjusting a service, initiating a service, terminating a service, adapting a service, wherein the service may be a local service running in the mobile device and/or a service remotely accessed by the mobile device.

16. The mobile device of any preceding claim, **wherein** one or more of the features have been selected using a sequential forward selection (SFS) or sequential floating forward selection algorithm (SFFS).

17. A method for recognizing a context by a mobile device, comprising obtaining data indicative of the context of the mobile device and/or user thereof (404),
determining a plurality of feature values on the basis of and representing at least part of the data (406),
classifying, by an adaptive linear classifier, the plurality of feature values to a context class (408), and
adapting the classification logic of the classifier on the basis of the feature values and feedback information by the user (410, 412),
**characterized by** in the case of positive or negative feedback regarding the performed classification, configuring the classifier to adapt the classification logic thereof such that a prototype feature value vector of the recognized class is brought closer to or farther away from the feature vector determined by the plurality of feature values, respectively.

18. A computer program, **comprising** a code means adapted, when run on a computer, to execute the method of claim 17.

19. A carrier medium **comprising** the computer program of claim 18.

**Patentansprüche**

1. Mobilvorrichtung (102), die Folgendes umfasst:

eine Merkmalbestimmungslogik (230) zum Bestimmen mehrerer repräsentativer Merkmalwerte auf der Basis des Abfühlens von Daten, die den Kontext der Mobilvorrichtung und/oder ihres Nutzers anzeigen, und eine Kontexterkennungslogik (228), die einen adaptiven linearen Klassifizierer (234) enthält, der dafür konfiguriert ist, während einer Klassifizierungsaktion die mehreren Merkmalwerte auf eine Kontextklasse abzubilden, wobei der Klassifizierer des Weiteren dafür konfiguriert ist, seine Klassifikationslogik auf der Basis der Merkmalwerte und Rückmeldungsinformationen vom Nutzer der Mobilvorrichtung zu adaptieren (236), **dadurch gekennzeichnet, dass** der Klassifizierer - im Fall von positiver oder negativer Rückmeldung in Bezug auf die ausgeführte Klassifikation - dafür konfiguriert ist, seine Klassifikationslogik so zu adaptieren, dass ein Prototypmerkmalwertvektor der erkannten Klasse näher an den durch die mehreren Merkmalwerte bestimmten Merkmalvektor herangeführt bzw. weiter von diesem weggeführt wird.

2. Mobilvorrichtung nach Anspruch 1, die eine Anzahl von Abfühlentitäten (230) zum Erhalten der Abfühldaten umfasst, die den Kontext der Mobilvorrichtung und/oder ihres Nutzers anzeigen.

3. Mobilvorrichtung nach einem der vorangehenden Ansprüche, wobei mehrere Merkmale, die in der Kontextklassifizierung angewendet werden, gegenseitig im Wesentlichen linear trennbar sind.

4. Mobilvorrichtung nach Anspruch 3, wobei der Adaptierungsbetrag mindestens teilweise auf der Basis einer gewichteten Differenz zwischen dem neuen Merkmalvektor und dem alten Idealvektor bestimmt wird.

5. Mobilvorrichtung nach Anspruch 3 oder 4, wobei die Adaptierung auf der Basis eines exponentiellen gleitenden Durchschnitts (Exponential Moving Average, EMA) erfolgt.

6. Mobilvorrichtung nach einem der vorangehenden Ansprüche, wobei die Mobilvorrichtung dafür konfiguriert ist, eine Kontextklassifizierungsrückmeldung aus der einen oder den mehreren Aktionen, oder dem Nichtvorhandensein von Aktionen, des Nutzers in Bezug auf die Mobilvorrichtung zu schlussfolgern.

7. Mobilvorrichtung nach einem der vorangehenden Ansprüche, wobei die Mobilvorrichtung dafür konfiguriert ist, die Kontexterkennungslogik für den Nutzer der Mobilvorrichtung durch die Adaptierung auf der Basis einer Rückmeldung vom Nutzer zu personalisieren.

8. Mobilvorrichtung nach einem der vorangehenden Ansprüche, wobei die Mobilvorrichtung dafür konfiguriert ist, eine direkte Rückmeldung von dem Nutzer zu erhalten, die einen Hinweis auf eine korrekte Klasse für die Daten enthält, woraufhin ein Prototypmerkmalwertvektor der Klasse auf der Basis der Daten und/oder der davon abgeleiteten Merkmale adaptiert wird.

9. Mobilvorrichtung nach Anspruch 8, wobei die Adaptierung auf der Basis einer Lernvektorquantisierung (Learning Vector Quantization, LVQ) erfolgt.

10. Mobilvorrichtung nach einem der vorangehenden Ansprüche, wobei der Klassifizierer einen Mindestdistanzklassifizierer enthält.

11. Mobilvorrichtung nach einem der vorangehenden Ansprüche, wobei die Abfühlentitäten dafür konfiguriert sind, Daten relativ zu mindestens einem Element zu erhalten, das aus folgender Gruppe ausgewählt ist: Beschleunigung, Hüftbeschleunigung, Handgelenkbeschleunigung, Druck, Licht, Zeit, Herzrate, Temperatur, Standort, aktives Nutzerprofil, Kalendereintragsdaten, Batteriezustand und Tondaten.

12. Mobilvorrichtung nach einem der vorangehenden Ansprüche, wobei die Mobilvorrichtung dafür konfiguriert ist, anhand der Daten mindestens ein Merkmal zu bestimmen, das aus folgender Gruppe ausgewählt ist: maximale Beschleunigung, kleinste Beschleunigung, mittlere Beschleunigung, Differenz zwischen maximaler und kleinster Beschleunigung, Varianz der Beschleunigung, Leistungsspektrumentropie, Spitzenfrequenz, Spitzenleistung und mittlere Herzrate.

13. Mobilvorrichtung nach einem der vorangehenden Ansprüche, wobei die Mobilvorrichtung dafür konfiguriert ist, mindestens eine Aktion in Abhängigkeit von der erkannten Kontextklasse auszuführen.

14. Mobilvorrichtung nach Anspruch 13, wobei die Aktion aus folgender Gruppe ausgewählt ist: Adaptierung der Nutzerschnittstelle der Vorrichtung, Adaptierung einer Anwendung, Adaptierung eines Menüs, Adaptierung eines Profils, Adaptierung eines Modus, Auslösen einer Anwendung, Schließen einer Anwendung, Hervorbringen einer Anwendung, Hervorbringen einer Ansicht, Minimieren einer Ansicht, Aktivieren oder Beenden einer Tastatursperre, Aufbauen einer Verbindung, Beenden einer Verbindung, Senden von Daten, Senden einer Nachricht, Auslösen einer Tonausgabe wie zum Beispiel Wiedergeben eines Tones, Aktivieren einer taktilen Rückmeldung wie zum Beispiel Vibrationen, Aktivieren der Anzeige, Eingabe von Daten in eine Anwendung, und Abschalten des Gerätes.

15. Mobilvorrichtung nach Anspruch 13 oder 14, wobei die mindestens eine Aktion mindestens ein Element umfasst, das aus folgender Gruppe ausgewählt ist: Justieren eines Dienstes, Initiieren eines Dienstes, Beenden eines Dienstes, Adaptieren eines Dienstes, wobei der Dienst ein lokaler Dienst sein kann, der in der Mobilvorrichtung abläuft, und/oder ein Dienst sein kann, auf den ein Fernzugriff durch die Mobilvorrichtung erfolgen kann.

16. Mobilvorrichtung nach einem der vorangehenden Ansprüche, wobei eines oder mehrere der Merkmale mittels eines Sequential Forward Selection (SFS)- oder eines Sequential Floating Forward Selection (SFFS)-Algorithmus ausgewählt wurden.

17. Verfahren zum Erkennen eines Kontextes durch eine Mobilvorrichtung, das Folgendes umfasst:

Erhalten von Daten, die den Kontext der Mobilvorrichtung und/oder ihres Nutzers anzeigen (404),
Bestimmen mehrerer Merkmalwerte auf der Basis der Daten, wobei die Merkmalwerte mindestens einen Teil der Daten (406) darstellen,
Klassifizieren, durch einen adaptiven linearen Klassifizierer, der mehreren Merkmalwerte zu einer Kontextklasse (408), und
Adaptieren der Klassifikationslogik des Klassifizierers auf der Basis der Merkmalwerte und Rückmeldungsinformationen von dem Nutzer (410, 412),
**gekennzeichnet durch** - im Fall von positiver oder negativer Rückmeldung in Bezug auf die ausgeführte Klassifikation - Konfigurieren des Klassifizierers, seine Klassifikationslogik so zu adaptieren, dass ein Prototypmerkmalwertvektor der erkannten Klasse näher an den **durch** die mehreren Merkmalwerte bestimmten Merkmalvektor herangeführt bzw. weiter von diesem weggeführt wird.

18. Computerprogramm, das ein Code-Mittel umfasst, das dafür ausgelegt ist, wenn es auf einem Computer abläuft, das Verfahren nach Anspruch 17 auszuführen.

19. Trägermedium, welches das Computerprogramm nach Anspruch 18 umfasst.

## Revendications

1. Dispositif de communication (102) comprenant :

une logique de détermination de caractéristique (230) pour déterminer une pluralité de valeurs caractéristiques représentatives sur la base de la détection de données indicatives du contexte du dispositif mobile et/ou d'un utilisateur de celui-ci, et
une logique de reconnaissance de contexte (228) comprenant un classificateur linéaire adaptatif (234), configuré pour mettre en concordance, au cours d'une action de classification, la pluralité de valeurs caractéristiques avec une classe de contexte, dans lequel le classificateur est en outre configuré pour adapter (236) la logique de classification de celui-ci sur la base des valeurs caractéristiques et d'informations de rétroaction par l'utilisateur du dispositif mobile,
**caractérisé en ce que**, dans le cas d'une rétroaction positive ou négative concernant la classification effectuée, le classificateur est configuré pour adapter la logique de classification de celui-ci de sorte qu'un vecteur de valeur caractéristique prototype de la classe reconnue soit respectivement rapproché ou éloigné du vecteur caractéristique déterminé par la pluralité de valeurs caractéristiques.

2. Dispositif mobile selon la revendication 1, comprenant un nombre d'entités de détection (230) pour obtenir les données de détection indicatives du contexte du dispositif mobile et/ou de l'utilisateur de celui-ci.

3. Dispositif mobile selon l'une quelconque des revendications précédentes, dans lequel une pluralité de caractéristiques appliquées dans la classification de contexte sont mutuellement séparables sensiblement linéairement.

4. Dispositif mobile selon la revendication 3, dans lequel la quantité d'adaptation est au moins partiellement déterminée sur la base d'une différence pondérée entre le nouveau vecteur caractéristique et un ancien vecteur idéal.

5. Dispositif mobile selon la revendication 3 ou 4, dans lequel l'adaptation est basée sur une moyenne mobile exponentielle (EMA).

6. Dispositif mobile selon l'une quelconque des revendications précédentes, dans lequel le dispositif mobile est configuré pour déduire une rétroaction de classification de contexte à partir de l'une ou plusieurs actions, ou de l'absence d'actions, de l'utilisateur en ce qui concerne le dispositif mobile.

7. Dispositif mobile selon l'une quelconque des revendications précédentes, dans lequel le dispositif mobile est configuré pour personnaliser la logique de reconnaissance de contexte pour l'utilisateur du dispositif mobile par l'intermédiaire de l'adaptation basée sur une rétroaction de l'utilisateur.

8. Dispositif mobile selon l'une quelconque des revendications précédentes, dans lequel le dispositif mobile est configuré pour obtenir une rétroaction directe de l'utilisateur comprenant une indication d'une classe correcte pour les données, moyennant quoi un vecteur de valeur caractéristique prototype de la classe est adapté sur la base des données et/ou des caractéristiques dérivées de celle-ci.

9. Dispositif mobile selon la revendication 8, dans lequel l'adaptation est basée sur une quantification vectorielle d'apprentissage (LVQ).

10. Dispositif mobile selon l'une quelconque des revendications précédentes, dans lequel le classificateur comprend un classificateur de distance minimale.

11. Dispositif mobile selon l'une quelconque des revendications précédentes, dans lequel les entités de détection sont configurées pour obtenir des données relatives à au moins un élément sélectionné dans le groupe se composant de : accélération, accélération de hanche, accélération de poignet, pression, lumière, heure, pouls, température, emplacement, profil d'utilisateur actif, données d'entrée de calendrier, état de batterie, et données sonores.

12. Dispositif mobile selon l'une quelconque des revendications précédentes, dans lequel le dispositif mobile est configuré pour déterminer, à partir des données, au moins une caractéristique sélectionnée dans le groupe se composant de : accélération maximale, accélération minimale, accélération moyenne, différence entre l'accélération maximale et l'accélération minimale, variance de l'accélération, entropie de spectre de puissance, fréquence de pointe, puissance de pointe et pouls moyen.

13. Dispositif mobile selon l'une quelconque des revendications précédentes, dans lequel le dispositif mobile est configuré pour effectuer au moins une action en fonction de la classe de contexte reconnue.

14. Dispositif mobile selon la revendication 13, dans lequel ladite action est sélectionnée dans le groupe se composant de : adaptation de l'interface utilisateur du dispositif, adaptation d'une application, adaptation d'un menu, adaptation d'un profil, adaptation d'un mode, déclenchement d'une application, fermeture d'une application, mise en avant d'une application, mise en avant d'une vue, minimisation d'une vue, activation ou terminaison d'un verrouillage de clavier, établissement d'une connexion, terminaison d'une connexion, transmission de données, envoi d'un message, déclenchement d'une sortie audio comme une lecture d'un son, activation d'une rétroaction tactile comme une vibration, activation de l'affichage, entrée de données dans une application, et arrêt du dispositif.

15. Dispositif mobile selon la revendication 13 ou 14, dans lequel ladite au moins une action comprend au moins un élément sélectionné dans le groupe se composant de : ajustement d'un service, lancement d'un service, terminaison d'un service, adaptation d'un service, dans lequel le service peut être un service local s'exécutant dans le dispositif mobile et/ou un service auquel le dispositif mobile accède à distance.

16. Dispositif mobile selon l'une quelconque des revendications précédentes, dans lequel une ou plusieurs des caractéristiques ont été sélectionnés en utilisant un algorithme de sélection ascendante séquentielle (SFS) ou de sélection ascendante flottante séquentielle (SFFS).

17. Procédé de reconnaissance d'un contexte par un dispositif mobile, comprenant :

l'obtention de données indicatives du contexte du dispositif mobile et/ou d'un utilisateur de celui-ci (404),

la détermination d'une pluralité de valeurs caractéristiques sur la base d'au moins une partie des données (406) et la représentant,

la classification, par un classificateur linéaire adaptatif, de la pluralité de valeurs caractéristiques dans une classe de contexte (408), et

l'adaptation de la logique de classification du classificateur sur la base des valeurs caractéristiques et d'informations de rétroaction par l'utilisateur (410, 412),

**caractérisé par** dans le cas d'une rétroaction positive ou négative en ce qui concerne la classification effectuée, la configuration du classificateur pour adapter la logique de classification de celui-ci de sorte qu'un vecteur de valeur caractéristique prototype de la classe reconnue soit respectivement rapproché ou éloigné du vecteur caractéristique déterminé par la pluralité de valeurs caractéristiques.

18. Programme informatique, comprenant un moyen de code apte, lorsqu'il est exécuté sur un ordinateur, à exécuter le procédé selon la revendication 17.

19. Support comprenant le programme informatique selon la revendication 18.

110

112

114

116

102

CONTEXT
RECOGNITION

118

120

122

124

106

COMMUNICATION
NETWORK(S)

104

Figure 1

202  230  220  224
228

SENSING    PROCESSOR

UI    CLASSI-    TRANS
FIER    CEIVER(S)

102

MEMORY

222

226

○ EXEMPLARY SENSOR
LOCATIONS

228

CLASSIFICATION  234

230    232    236

FEATURE
DETERMINATION    OVERALL
CONTROL    ADAPTATION

238

I/O

DATA INPUT    DATA OUTPUT

Figure 2

Figure 3a

Figure 3b

Figure 3c

Figure 3d

402

START-UP

404

OBTAIN DATA FROM SENSING ENTITIES

406

DETERMINE FEATURE(S)

408

CONTEXT CLASSIFICATION

410

FEEDBACK OBTAINED

YES

NO

412

ADAPT CONTEXT CLASSIFIER

414

END

Figure 4

**EP 2 433 416 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090099820 A1
- US 2002167488 A